(19) **Europäisches Patentamt**

**European Patent Office**

**Office européen des brevets**

(11) **EP 0 705 177 B1**

(12) **EUROPÄISCHE PATENTSCHRIFT**

(45) Veröffentlichungstag und Bekanntmachung des Hinweises auf die Patenterteilung:
**15.10.1997 Patentblatt 1997/42**

(21) Anmeldenummer: 95902061.1

(22) Anmeldetag: **09.12.1994**

(51) Int. Cl.$^6$: **B60K 28/16**

(86) Internationale Anmeldenummer:
**PCT/DE94/01464**

(87) Internationale Veröffentlichungsnummer:
**WO 95/18024 (06.07.1995 Gazette 1995/29)**

(54) **ANTRIEBSSCHLUPFREGLER**

TRACTION-CONTROL UNIT

SYSTEME D'ANTIPATINAGE A L'ACCELERATION

(84) Benannte Vertragsstaaten:
**CH DE FR LI SE**

(30) Priorität: 24.12.1993 DE 4344634

(43) Veröffentlichungstag der Anmeldung:
**10.04.1996 Patentblatt 1996/15**

(73) Patentinhaber: **ROBERT BOSCH GMBH**
**70442 Stuttgart (DE)**

(72) Erfinder:
• **SCHÄFER, Jochen**
**D-74321 Bietigheim-Bissingen (DE)**
• **SAUTER, Thomas**
**D-71686 Remseck (DE)**

(56) Entgegenhaltungen:
**DE-A- 4 101 385**          **DE-A- 4 106 202**
**DE-C- 3 938 444**

**Beschreibung**

Stand der Technik

Es ist bekannt, bei einem Antriebsschlupfregler (ASR) bei Auftreten einer Durchdrehneigung das Motormoment zu reduzieren (siehe z.B. DE 34 17 089 A1). Die Motormomentenreduzierung erfolgt ab Erreichen eines bestimmten Radschlupfs und/oder einer bestimmten Radbeschleunigung eines oder der angetriebenen Räder oder durch ein sonstiges Kriterium für das Durchdrehen des oder der Räder. Man kann zur Antriebsschlupfregelung die Kraftstoffzufuhr reduzieren (Drosselklappenverstellung oder Einspritzmengensteuerung) aber auch auf die Zündung Einfluß nehmen (Zündaussetzregelung oder Zündzeitpunktverstellung). Die Änderung des Motormoments erfolgt beim Stand der Technik entlang einer Rampe bis das Instabilitätskriterium wieder unterschritten ist.

Aus der DE-C1 39 38 444 die die Merkmale des Oberbegriffs des 1. Anspruchs beinhaltet ist ein Antriebschlupfregler bekannt, bei welchem ein Reduzierantriebsmoment berechnet wird, auf das das Antriebsmoment bei Auftreten eines bestimmten Schlupfes reduziert wird. Dieses Reduzierantriebsmoment wird auf der Basis der Geschwindigkeit des Fahrzeugs, der Masse des Fahrzeugs, der Beschleunigung des Fahrzeugs, unter Berücksichtigung des Einflusses von Störgrößen, wie z.B. unterschiedliche Beladung, die auf das Reduzierantriebsmoment einwirken, sowie schlupfabhängiger Größen berechnet.

Vorteile der Erfindung

Bei der erfindungsgemäßen Ausbildung des ASR wird bei Auftreten einer Antriebsinstabilität das Motormoment auf das Antriebsmoment reduziert, das für den gegebenen Augenblick unter Berücksichtigung der Störeinflüsse wie Steigung, Anhängelast und/oder Zuladung ausreichend ist (Bedarfsmoment), und bei dem es zu keinem Durchdrehen kommen kann. Das Bedarfsmoment wird laufend berechnet, um es im Bedarfsfall sofort zur Regelung zur Verfügung zu haben.

Man kann (wenn Fahrzeugmasse, Massenträgheitsmomente, Luft- und Rollwiderstand bekannt sind) für die Fahrt in der Ebene einem bestimmten Antriebsmoment MA die zu erzielende Geschwindigkeit bzw. Beschleunigung zuordnen.

Abweichungen davon werden durch zusätzlichen Momentenbedarf verursacht, so z.B. durch Steigung, Zuladung oder Anhängelast. (Die wertmäßige Erfassung dieser Störgrößen ohne zusätzliche Sensoren ist nicht bekannt.)

Zur wertmäßigen Erfassung dieser Störgrößen hat es sich als vorteilhaft erwiesen als Hilfsgröße die Ersatzmasse zu wählen, die ohne Störmomente gleich der vorgegebenen Fahrzeugmasse ist, bei Auftreten von Störmomenten jedoch vergrößert oder auch verkleinert wird.

Der erhöhte Momentenbedarf wird dem Rollwiderstand und der Beschleunigung durch erhöhte Masse (Ersatzmasse) zugeordnet. Bei Fahrzeugbeschleunigung in der Ebene gilt:

Antriebsmoment MA = Luftwiderstand MWL + Rollwiderstandsmoment
MWR + Beschleunigungswiderstand MWB + rotatorischer Beschleunigungswiderstand MWBR

$$MA = MWL + MWR + MWB + MWBR$$

$MA = k1{*}v^2 + k2{*}m + k3{*}m{*}a + MWBR$, wobei v die Fahrzeuggeschwindigkeit, m die Fahrzeugmasse, a die Beschleunigung und k1 bis k3 fahrzeugspezifische Konstanten sind.

Die Ersatzmasse MERS berechnet sich somit:

$$MERS = \frac{MA - MWL - MWBR}{k3{*}a + k2}$$

Im Falle einer Instabilität wird aufgrund der erlernten Ersatzmasse das Antriebsmoment auf das tatsächliche Bedarfsmoment reduziert. Ein erhöhter Momentenbedarf beispielsweise durch Zuladung, Steigung oder Anhängelast wird bei der Berechnung der Höhe des Bedarfsmoments somit berücksichtigt, ebenso ein verminderter Momentenbedarf beispielsweise durch Gefälle.

Zusätzliche Sensoren zur Bestimmung des Fahrwiderstands werden nicht benötigt.

Das Reduzierantriebsmoment (Bedarfsmoment) MAR ergibt sich aus folgender Ableitung. Es gilt, für ein beschleunigendes Fahrzeug:

$$MAR = MWL + MWR + MWB * F$$

Hieraus folgt:

$$MAR = k1 * v^2 + k2 * MERS + k3 * MERS * a * F$$

wobei der Beschleunigungswiderstand MWB mit einem Faktor F multipliziert werden kann, um auf den Vortrieb oder Komfort Einfluß zu nehmen. Er wird nahe bei 1 liegen.

Um negative Einflüsse zu unterdrücken, wird die Erhöhungsgeschwindigkeit der Ersatzmasse begrenzt, z.B. auf 12.000 kg/s.

Um die Korrelation von Ersatzmasse und Antriebsmoment (und Beschleunigung) zu erreichen, ist es sinnvoll, das Signal mit einem PT1-Filter zu filtern.

Das Antriebsmoment MA läßt sich aus dem abgegebenen Motormoment MMOT berechnen

$$MA = MMOT * iGES * \eta \text{ für Schaltgetriebe-Fz.}$$

$$MA = MMOT * iGES * \eta * \mu \text{ für Automat.-Fz.}$$

wobei iGES die Gesamtübersetzung, $\eta$ der Wirkungsgrad und $\mu$ die Wandlerübersetzung ist. Die Gangstufe kann aus dem Drehzahlverhältnis des Motors und der Antriebsachse berechnet werden oder in sonstiger Weise ermittelt werden.

Bei Automatik-Fahrzeugen wird die Ganginformation z.B. aus der Getriebesteuerung erhalten.

Das abgegebene Motormoment MMOT kann entweder über ein Kennfeld $MMOT = f(nMot, \alpha)$ (nMot Motordrehzahl, $\alpha$ Drosselklappenwinkel) oder durch ein von einer digitalen Motorsteuerung generiertes Lastsignal bestimmt werden.

Figurenbeschreibung

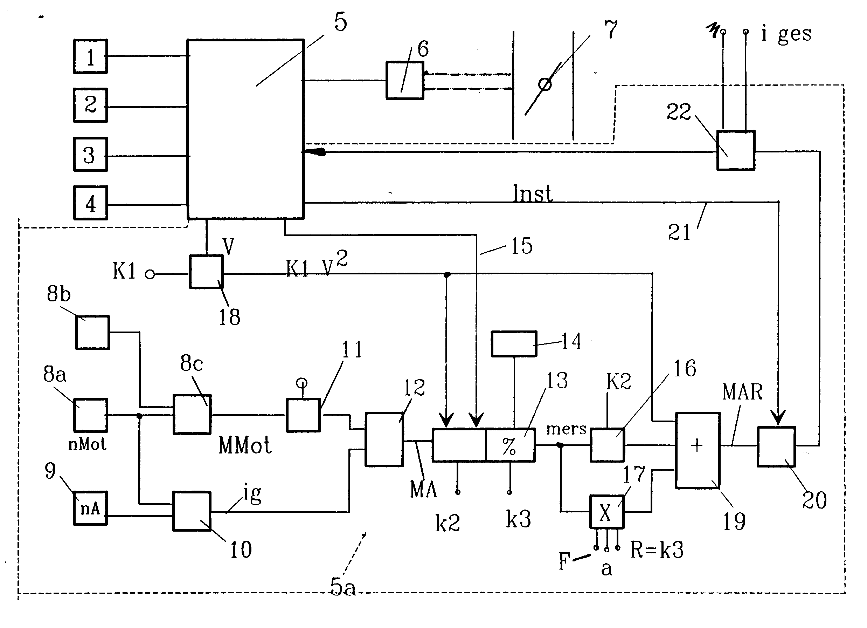

Anhand der Zeichnung wird ein Ausführungsbeispiel der Erfindung näher erläutert. Die Figur 1 zeigt ein Blockschaltbild des Ausführungsbeispiels. Die Lehre der Erfindung kann auch mit einem entsprechend programmierten $\mu$-Prozessor ausgeführt werden.

In der Zeichnung sind mit 1 und 2 die Radgeschwindigkeitssensoren der angetriebenen Räder, mit 3 und 4, die der nicht angetriebenen Räder bezeichnet. Mit 5 ist eine Auswerteschaltung bezeichnet, die mit Hilfe der Signale v1 bis v4 der Sensoren 1 bis 4 feststellt, ob an einem oder beiden Rädern ein unzulässiger Radschlupf $\lambda 1$ auftritt (z.B. $\lambda 1 = v1 - (v3 + v4)/2$ ; $\lambda 1 >$ eine Schwelle). Eine erkannte Instabilität steuert ein Stellglied 6 an, das die Drosselklappe 7 des Fahrzeugs verstellt.

Die Auswerteschaltung ist nun erfindungsgemäß um einen Teil 5a erweitert. Diesem Teil 5a wird die Drehzahl des Motors nMOT von einem Sensor 8a die Stellung der Drosselklappe $\alpha$ von einem Sensor 8b, und die Drehzahl der Antriebsachse nA von einem Sensor 9 zugeführt: Durch Vergleich der Drehzahlen nMOT und nA in einem Vergleicher 10 erhält man die eingelegte Gangstufe i1, i2 ... i5 und damit auch die Gesamtübersetzung iGES des Antriebsstrangs. In einem Block 8c ist ein Kennfeld abgelegt, und dieser gibt bei Eingabe der Motordrehzahl $\eta$ MOT und des Drosselklappenwinkels $\alpha$ ein dem Motormoment MMOT entsprechendes Signal ab. Durch Multiplikation des Motormoments MMOT mit dem Wirkungsgrad $\eta$ in einem Multiplizierer 11 und dieses Produkts MMOT * $\eta$ mit iGES in dem Multiplizierer 12 erhält man das Antriebsmoment

$$MA = MMOT * \eta * iGES.$$

In einem anderen Zweig (Block 18) wird aus der aus der Auswerteschaltung 5 gelieferten Fahrzeuggeschwindigkeit $v = v3 + v4 / 2$ der Ausdruck $k1 * v^2$ gebildet. k1 ist eine fahrzeugspezifische Konstante, die wie folgt definiert ist:

$$k1 = c_w * A_L * \rho / 2 * R,$$

wobei

$c_w$ =     Luftwiderstand-Beiwert
$A_L$ =     Stirnfläche des Fz.
$\rho$ =     Luftdichte
R =     Radhalbmesser

und z.B. 0.278 kg beträgt.

Sowohl das der Größe $k1v^2$ als auch das der Größe MA entsprechende Signal wird einem Subtrahier- Dividierblock 13 zugeführt, dem zusätzlich noch ein in einem Block 14 erzeugtes Signal, das dem Ausdruck MWBR = I * DVMAN/R

EP 0 705 177 B1

entspricht zugeführt wird.

Der Block 13 erzeugt ein der Ersatzmasse

$$MERS = \frac{MA\text{-}klv^2 - MWBR}{k3{*}a * k2}$$

entsprechendes Signal, wobei noch das über eine Leitung 15 zugeführte Beschleunigungssignal a des Fahrzeugs benötigt wird, das in der Auswerteschaltung aus der Änderung der Fahrzeuggeschwindigkeit v3 + v4 / 2 ermittelt werden kann. Außerdem werden noch die fahrzeugspezifischen Konstanten k2 und k3 benötigt, die sich wie folgt ermitteln lassen:

$$k2 = f_R * g * R$$

$$k3 = R$$

wobei

$f_R$ = Rollwiderstandsbeiwert
g = Fallbeschleunigung
und
R = Radhalbmesser
I = Trägheitsmoment

ist und k2 z.B. 0,038 $m^2$ / $s^2$ und R 0,3 m betragen kann.

Am Ausgang des Blocks 13 steht das der Ersatzmasse MERS entsprechende Signal an, das in einem Multiplizierer 16 mit k2 multipliziert wird. Außerdem wird in einem Multiplizierblock 17 der Ausdruck MERS * a * R gebildet.

Die Signale der Blöcke 16, 17 und 18 werden einem Addierer 19 zugeführt, der durch Addition ein dem Bedarfsmoment

$$MAR = MWL + MWR * MWB * F$$

$$MAR = k1{*}v^2 + k2 * MERS + k3 * MERS * a * F$$

entsprechendes Signal bildet. Tritt eine Instabilität auf, wird dies über eine Leitung 21 dem Block 20 gemeldet, der dann MAR abgibt, das einem Block 22 zugeführt wird. Der Block 22 rechnet das Moment MAR in Motormoment MMOT zurück mit Getriebe- bzw. Wandlerübersetzung und Wirkungsgrad. Es entsteht ein der Sollstellung der Drosselklappe 7 entsprechendes Signal, das über die Auswerteschaltung 5 auf das Stellglied wirkt, und dadurch die Drosselklappe 7 schnell so rückstellt, daß nur noch das Bedarfsmoment wirksam ist. Die weitere Regelung von diesem Bedarfsmoment aus erfolgt nun durch die Auswerteschaltung 5 in üblicher Weise.

Der Block 13 kann an seinem Ausgangsteil einen Begrenzer aufweisen, der die Anstiegsgeschwindigkeit der Ersatzmasse begrenzt. Es kann noch ein weiterer Begrenzer enthalten sein, der einen Maximalwert der Ersatzmasse vorgibt. Außerdem kann der Block 13 eine Filteranordnung enthalten, die die Korrelation von Ersatzmasse, Antriebsmoment (und Beschleunigung) bewirkt.

**Patentansprüche**

1. Antriebschlupfregler, bei dem bei Auftreten einer Durchdrehneigung das Motormoment reduziert wird, bei dem ein Reduzierantriebsmoment MAR für den Antrieb ermittelt wird unter Berücksichtigung der Geschwindigkeit v des Fahrzeugs, seiner Masse m, seiner Beschleunigung a sowie des Einflusses von Störgrößen, die das Reduzierantriebsmoment beeinflussen, wobei mit Einsetzen der Antriebschlupfregelung das Antriebsmoment MA auf das Reduzierantriebsmoment MAR reduziert wird, dadurch gekennzeichnet, daß das Reduzierantriebsmoment MAR fortlaufend ermittelt wird und daß ferner bei der Bestimmung des Reduzierantriebsmoment MAR das aus dem Drehmoment des Motors des Fahrzeugs berechnete Antriebsmoment MA berücksichtigt wird.

2. Antriebschlupfregler nach Anspruch 1, dadurch gekennzeichnet, daß das Reduzierantriebsmoment MAR aus 1) dem dem Luftwiderstand entsprechenden Moment MWL, 2) dem dem Rollwiderstand entsprechenden Moment MWR und 3) dem Beschleunigungsmoment MWB des Fahrzeugs ermittelt wird, wobei die in den Anteilen 2) und 3) enthaltene Fahrzeugmasse m durch eine Ersatzmasse MERS ersetzt ist, welche den Einfluß der Störgrößen auf

4

das Reduzierantriebsmoment enthält.

3. Antriebsschlupfregler nach Anspruch 2, dadurch gekennzeichnet, daß die Ersatzmasse mittels des Ausdrucks MERS = (MA - k1v$^2$) / (k3 * a + k2) ermittelt wird wobei k1 bis k3 fahrzeugspezifische Konstanten sind.

4. Antriebsschlupfregler nach Anspruch 3, daduch gekennzeichnet, daß zusätzlich noch ein die rotatorische Beschleunigung berücksichtigender Größe bei der Ermittlung der Ersatzmasse berücksichtigt wird.

$$MERS = \frac{MA - klv^2 - MWBR}{k3 * a + k2}$$

5. Antriebsschlupfregler nach einem der Ansprüche 1 bis 4, dadurch gekennzeichnet, daß die Anstiegsgeschwindigkeit der Ersatzmasse begrenzt ist.

6. Antriebsschlupfregler nach einem der Ansprüche 1 bis 6, dadurch gekennzeichnet, daß das Ersatzmassesignal zeitgefiltert ist.

## Claims

1. Traction slip controller in which the engine torque is reduced when a tendency of the wheels to spin occurs, in which a reducing drive torque MAR for the drive is determined taking into account the speed v of the vehicle, its mass m, its acceleration a as well as the influence of interfering variables which influence the reducing drive torque, the drive torque MA being reduced to the reducing drive torque MAR when the traction slip control begins, characterized in that the reducing drive torque MAR is determined continuously and in that, furthermore, the drive torque MA calculated from the torque of the engine of the vehicle is taken into account when determining the reducing drive torque MAR.

2. Traction slip controller according to Claim 1, characterized in that the reducing drive torque MAR is determined from 1) the torque MWL corresponding to the air resistance, 2) the torque MWR corresponding to the rolling resistance and 3) the acceleration torque MWB of the vehicle, the vehicle mass m contained in the components 2) and 3) being replaced by an equivalent mass MERS which includes the influence of the interfering variables on the reducing drive torque.

3. Traction slip controller according to Claim 2, characterized in that the equivalent mass is determined by means of the expression
MERS = (MA k1v$^2$) / (k3 * a + k2) , k1 to k3 being vehicle-specific constants.

4. Traction slip controller according to Claim 3, characterized in that a variable, which takes into account the rotational acceleration, is also taken into account during the determination of the equivalent mass

$$MERS = \frac{MA - klv^2 - MWBR}{k3 * a + k2}$$

5. Traction slip controller according to any of Claims 1 to 4, characterized in that the speed of increase of the equivalent mass is limited.

6. Traction slip controller according to any of Claims 1 to 5, characterized in that the equivalent mass signal is time-filtered.

## Revendications

1. Régulateur antipatinage qui réduit le couple moteur dès l'apparition d'une tendance au patinage, et détermine un couple moteur réduit MAR pour l'entraînement en tenant compte de la vitesse v du véhicule, de sa masse m, de son accélération a, ainsi que de l'influence des grandeurs parassites agissant sur le couple moteur réduit, et la mise en oeuvre de la régulation antipatinage réduit le couple moteur MA au couple moteur réduit MAR,
caractérisé en ce que
le couple moteur réduit MAR se détermine en continu et en outre en déterminant le couple moteur réduit MAR on

EP 0 705 177 B1

tient compte du couple moteur MA calculé à partir du couple du moteur du véhicule.

2. Régulateur selon la revendication 1,
caractérisé en ce que
le couple moteur réduit MAR se détermine à partir de 1) du couple MWL correspondant à la résistance de l'air, 2) du couple MWR correspondant à la résistance de roulement et 3) du couple d'accélération MWB du véhicule, la masse m du véhicule contenue dans les composants 2) et 3) étant remplacée par une masse équivalente MERS qui contient l'influence des grandeurs parasites sur le couple moteur réduit.

3. Régulateur selon la revendication 2,
caractérisé en ce que
la masse équivalente se détermine par l'expression
MERS = (MA - k1v$^2$) / (k3 * a + k2) , dans laquelle k1...k3 sont des constantes caractéristiques du véhicule.

4. Régulateur selon la revendication 3,
caractérisé en ce qu'
en plus on tient compte d'une grandeur prenant en compte l'accélération de rotation pour déterminer la masse équivalente :

$$MERS = \frac{MA-klv^2-MWBR}{k3^*a+k2}$$

5. Régulateur selon l'une des revendications 1 à 4,
caractérisé en ce que
la vitesse de montée de la masse équivalente est limitée.

6. Régulateur selon l'une des revendications 1 à 4,
caractérisé en ce que
la masse équivalente est filtrée en fonction du temps.

EP 0 705 177 B1